# EUROPÄISCHE PATENTANMELDUNG

(11) **EP 2 426 090 A2**
(43) Veröffentlichungstag der Anmeldung: **07.03.2012**
(21) Anmeldenummer: 11180314.4
(22) Anmeldetag: 07.09.2011
(51) Int. Cl.: C02F 3/00, C02F 3/12, C02F 3/30

(54) **Diskontinuierliches Verfahren zur Abwasserreinigung und Vorrichtung zur Durchführung dieses Verfahrens**

(30) Priorität: 07.09.2010 AT 14912010
(71) Anmelder: Gassner, Kurt, 2011 Sierndorf (AT)
(72) Erfinder: Gassner, Kurt, 2011 Sierndorf (AT)
(74) Vertreter: Babeluk, Michael

(57) **Zusammenfassung**

Die Erfindung betrifft ein diskontinuierliches Verfahren zur Abwasserreinigung mit den Schritten: Zufuhr von Abwasser in einen Belebungsreaktor (10), Belüften des Belebungsreaktorinhalts, Beenden der Belüftung und Absinken von Schlamm und Abzug von Klarwasser und gegebenenfalls Zuführung oder Entnahme von aktiver Biomasse in Abhängigkeit der Ammonium-Stickstoff-Schlammbelastung, wobei die Ammoniumkonzentration und gegebenenfalls die Temperatur des zugeführten Abwassers pro Reaktorfüllung überwacht wird, zusätzlich der Trockensubstanzgehalt des Belebtschlamms bestimmt wird und vorzugsweise die sich daraus ergebende Ammonium-Stickstoff-Schlammbelastung mit einem vorgegebenen Wert oder Wertebereich verglichen wird, und bei Überschreitung oder Unterschreitung des vorgegebenen Wertes oder Wertebereichs Transfer-/Belebtschlamm aus dem Belebungsreaktor (10) abgezogen oder Transfer-/Belebtschlamm dem Belebungsreaktor (10) aus dem Transferschlammdepot (40) zugeführt wird, sowie eine Vorrichtung (100) hierfür.

## Beschreibung

Die Erfindung betrifft ein diskontinuierliches Verfahren zur Abwasserreinigung mit den Schritten:
- Zufuhr von Abwasser in einen Belebungsreaktor
- Belüften des Belebungsreaktorinhalts
- Beenden der Belüftung und Absinken von Schlamm
- Abzug von Klarwasser und gegebenenfalls von zumindest einem Teil des abgesetzten Schlamms,
wobei der Trockensubstanzgehalt des im Belebungsreaktors befindlichen Belebtschlamms bestimmt wird, sowie eine Vorrichtung zur Durchführung dieses Verfahrens.

Ein Verfahren mit portionsweiser Abwasserbehandlung ist aus der EP 2 078 702 A1 des Anmelders bekannt geworden. Darin wird ein für den Betrieb einer biologischen Kläranlage geeignetes, als SBR (Sequencing Batch Reactor) - Verfahren bezeichnetes Reinigungsverfahren für Abwässer beschrieben, bei welchem in einen Belebungsreaktor eine vorbestimmte Abwassermenge eingepumpt und in den oben beschriebenen Schritten behandelt wird. Hierbei erfolgt innerhalb des Belebungsreaktors zur Bestimmung der Absetzgeschwindigkeit des Schlamms eine automatische Trübemessung des Abwassers, um eine Optimierung der Verfahrensführung zu erzielen.

Es ist nun Aufgabe der Erfindung, das in der EP 2 078 702 A1 beschriebene Reinigungsverfahren dahingehend zu verbessern, dass auch bei geringer Auslastung der Reinigungsanlage, also im Teillastbetrieb und/oder bei einem Temperaturanstieg des Abwassers im Zulauf von mehr als 10°C, wie auch bei Volllastbetrieb, eine optimale Schlammbelastung im Belebungsreaktor und damit eine energiesparende und kosteneffiziente Betriebsweise der Abwasserreinigungsanlage bei gleichzeitiger Einhaltung der gesetzlichen Vorgaben erzielt wird.

Diese Aufgabe wird erfindungsgemäß dadurch gelöst, dass die Ammoniumkonzentration des zugeführten Abwassers pro Reaktorfüllung überwacht wird, und die aus den erhaltenen Messwerten für die Ammoniumkonzentration sowie für den Trockensubstanzgehalt (TS) die im Belebungsreaktor vorhandene Ammonium-Stickstoff-Schlammbelastung (B_{TSNH4}) ermittelt wird, diese mit einem Sollwert verglichen wird und bei Abweichung des Ist-Wertes vom Sollwert das Verhältnis zwischen Belebtschlammmenge und Zulauffracht in dem Belebungsreaktor bevorzugterweise vor Beginn der Belüftungsphase verändert wird.

Der Trockensubstanzgehalt (TS) eines Schlammes wird in der Fachliteratur durch die suspendierten Stoffe in der Flüssigkeit (siehe beispielsweise Gujer, Siedlungswirtschaft (2007)) definiert (auch Total Suspendierte Stoffe, TSS), während der Trockenrückstand (TR) den gesamten Feststoffanteil, inklusive in der Flüssigkeit gelöste Salze und Ähnliches, benennt.

Die Schlammbelastung ist ein Wert zur Kontrolle der Dimension eines Belebungsbeckens und gibt direkt Auskunft über Reinigungsleistung des Schlamms und über die Menge an anfallendem Überschussschlamm. Die Schlammbelastung sollte stets in einem Wert von 0,05 - 0,15 kg / kg Trockensubstanzgehalt liegen, um die beste Abbauleistung zu erhalten, und zusätzlich eine Nitrifikation zuzulassen (Imhoff, Taschenbuch der Stadtentwässerung, Anhang 2, 2007). Ähnliche Angaben können auch Gujer, Siedlungswasserwirtschaft, Kap. 20.4.3, Anhang 3 (2006) entnommen werden, wonach die Schlammbelastung von 0,05 - 0,15 kg/kg Trockensubstanzgehalt ein wichtiger Parameter für die Bemessung von Kläranlagen mit Nitrifikation und Schlammstabilisierung (Tabelle 20.5) ist.

Das Arbeitsblatt DWA A 226 (DWA-Regelwerk, August 2009) spricht von üblichen Werten der Schlammbelastung im kommunalen Bereich von unter 0,05 oder sogar 0,04 kg/kg TS (Anhang 4). Es zeigt sich im Vergleich mit den oben zitierten Literaturstellen, dass die bestehenden Anlagen für die tatsächlichen, zukünftigen Belastungen zu groß ausgelegt sind. Dadurch ergibt sich ein großes Potential für die Optimierung des Schlammhaushalts, und damit verbunden für die Reduzierung der im Betrieb der Anlagen benötigten Energie.

Das erfindungsgemäße Verfahren ermöglicht durch Ermittlung der optimalen Schlammbelastung bei ausreichendem aeroben Schlammalter eine optimale und energie-effiziente Reinigungsleistung.

Voraussetzung für das erfindungsgemäße Verfahren ist, dass das zufließende Abwasser grundsätzlich eine Nitrifikation auf Grund seiner Zusammensetzung zulässt. Sinkt die Zulaufbelastung einer Abwasserreinigungsanlage ab, so fällt gleichzeitig auch weniger Schlamm innerhalb des Belebungsreaktors an. Darauf reagiert eine konventionelle Anlage mit der Reduzierung des Abzuges von Überschussschlamm, um den Trockensubstanzgehalt (TS) innerhalb des Belebungsreaktors gleich zu halten. Dies bedingt jedoch einen Anstieg des Schlammalters im Belebungsreaktor, weil die Menge an Schlamm konstant bleibt, jedoch weniger Überschussschlamm anfällt. Gleichzeitig wird hierfür mehr Energie zur Aufrechterhaltung der Schlammqualität innerhalb des Belebungsreaktors, insbesondere für die endogene Kohlenstoff- und Stickstoffatmung notwendige Belüftung, benötigt. Dadurch sinkt die Gesamtschlammbelastung zwar auf ein Minimum ab, es können hierbei jedoch keinerlei Verbesserungen im Abbaugrad erreicht werden, wie auch der nachfolgenden Grafik entnommen werden kann.

In dieser Grafik ist die Abbauleistung (BSB₅-Abbau; BSB₅ = biologischer Sauerstoffbedarf zum Abbau von organischen Kohlenstoffverbindungen, engl. BOD) in Abhängigkeit von der Schlammbelastung (g BSB₅/d*g TS) dargestellt. Es ist deutlich ersichtlich, dass bei Unterschreitung eines Wertes von 0,05 für die Schlammbelastung die Abbauleistung abfällt. Ebenso bewirkt ein zu geringes oder zu hohes Schlammalter eine Verringerung der Abbauleistung.

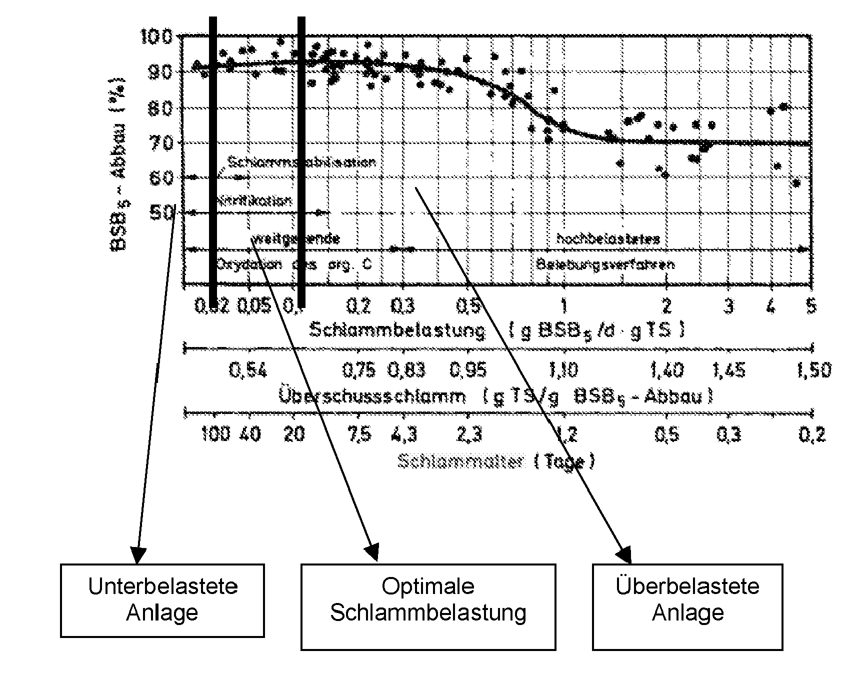

Da der biologischer Sauerstoffbedarf zum Abbau von organischen Kohlenstoffverbindungen (BSB₅), der zur Bestimmung der Schlammbelastung benötigt wird, nicht online bestimmt werden kann, wird im erfindungsgemäßen Verfahren die Ammoniumkonzentration im Abwasser sowie der Trockensubstanzgehalt (TS) in dem Belebungsreaktor mittels geeigneter Sonden online ermittelt und aus den erhaltenen Werten die Ammonium-Stickstoff-Schlammbelastung (B_{TSNH4} = kg NH₄/kg TS) errechnet. Mit dem weitgehend konstanten Verhältnis von BSB₅ zu Stickstoff, das lediglich einmal bzw. bei Neuanlagen während der Einfahrphase, in der sich der im System benötigte Belebtschlamm gebildet hat, empirisch ermittelt werden muss, lassen sich direkte Rückschlüsse auf die Schlammbelastung ziehen.

Erfindungsgemäß wird ein allfälliges Absinken oder Steigen der Zulaufbelastung durch die Messung der Ammoniumkonzentration im zugeführten Abwasser überwacht. Durch die Messung des Trockensubstanzgehaltes (TS) des Belebtschlamms im Belebungsreaktor und der daraus ermittelten Ammonium-Stickstoff-Schlammbelastung (B_{TSNH4}) wird gewährleistet, dass der Belebtschlamm im Belebungsreaktor höchst aktiv gehalten wird, und der Wert für die Ammonium-Stickstoff-Schlammbelastung (B_{TSNH4}) bei Abweichungen von den vorgegebenen Sollwerten korrigiert wird.

Darüber hinaus wird eine allfällige Schlammüberalterung, die auch durch Temperaturschwankungen entstehen kann, mittels angepasster Ammonium-Stickstoff-Schlammbelastung (B_{TSNH4}) verhindert. Diese Anpassung bewirkt eine erhöhte Stoffumsatzgeschwindigkeit, wodurch der biologische Abbauprozess wesentlich beschleunigt und dadurch die Belüftungsphase in dem Belebungsreaktor auf ein Minimum reduziert wird, was wiederum eine Reduktion der benötigten Energie und damit der Kosten zur Folge hat.

Unter "Belebungsreaktor" werden im Rahmen dieser Offenbarung jegliche Behältnisse verstanden, die zur Reinigung von Abwässern geeignet sind, gleichgültig ob in offener oder geschlossener Form. Unter "online" ist die vollautomatische, permanente und kontinuierliche Erfassung, Auswertung und Bewertung der relevanten Messdaten zu verstehen, sowie die anhand der Bewertung der Messdaten vollautomatisch durchzuführenden Maßnahmen wie Schlammabzug, Klarwasserabzug, Belüftung etc..

Als "Überschussschlamm" wird jene inaktive Schlammfraktion bezeichnet, die aus dem Reinigungsprozess entfernt wird, während unter "Belebtschlamm" jene Schlammfraktion verstanden wird, der in dem Belebungsreaktor die Reinigungsleistung erbringt. Dieser Belebtschlamm ist ein aktiver Schlamm, der aus autotrophen und heterotrophen Bakterienstämmen besteht und üblicherweise einheitlich als "Biomasse" bezeichnet wird.

Bevorzugterweise ist vorgesehen, dass zusätzlich eine Messung der Temperatur des Abwassers erfolgt. Diese Temperaturmessung kann vor und/oder während der Zufuhr des Abwassers in den Belebungsreaktor erfolgen, wobei die Messstelle innerhalb und/oder außerhalb des Belebungsreaktors angeordnet sein kann. Die Abwassertemperatur hat einen erheblichen Einfluss auf die Abbauleistung innerhalb des Belebungsreaktors, insbesondere auf die Wirksamkeit der im Belebtschlamm befindlichen Mikroorganismen und damit auf die Stoffumsatzgeschwindigkeit sowie die Reinigungsleistung insgesamt.

In einer weiteren Ausführung der Erfindung ist vorgesehen, dass zusätzlich eine Messung des chemischen Sauerstoffbedarfs (CSB), und des organisch gebundenen Kohlenstoffs (TOC) erfolgt. Auch diese Werte erlauben eine Aussage über den Zustand des in dem Belebungsreaktors vorhandenen Belebtschlamms.

Die Veränderung des Verhältnisses zwischen der Belebtschlammmenge und der Zulauffracht in dem Belebungsreaktor erfolgt in einer ersten Ausführung der Erfindung durch Änderung des Nutzvolumens in dem Belebungsreaktor. Diese Betriebsweise wird gewählt, wenn Abweichungen der vorgegebenen Ammonium-Stickstoff-Schlammbelastung aufgrund von kurzfristig schwankenden Zulauffrachten beispielsweise bei Tag- und Nachtbetrieb oder aufgrund von temporären Schwankungen des Trockensubstanzgehaltes des Belebtschlamms im Belebungsreaktor auftreten. Die Veränderung des Nutzvolumens erfolgt durch Variation der Zulauf- bzw. Ablaufmenge pro Zyklus. Das Nutzvolumen pro Behandlungszyklus kann dann verändert werden, wenn die hydr. Durchsatzleistung der Anlage eingehalten werden kann.

Tritt jedoch der Betriebszustand ein, dass die Zulaufmenge so hoch wäre, dass eine Verkleinerung des Nutzvolumens die Durchsatzleistung vermindern würde, kann das Nutzvolumen in dieser Phase nicht verkleinert werden.

Daher ist alternativ hierzu vorgesehen, dass besonders bei längerfristigen Schwankungen, insbesondere durch jahreszeitlichen und/oder saisonalen Einfluss, die Veränderung des Verhältnisses zwischen der Belebtschlammmenge und der Zulauffracht in dem Belebungsreaktor durch Abzug von Transferschlamm aus dem Belebungsreaktor oder Zufuhr von Transferschlamm in den Belebungsreaktor erfolgt.

Als "Transferschlamm" wird jene Schlammfraktion bezeichnet, die aus dem Belebungsreaktor in ein getrenntes Transferschlammdepot geleitet und aktiv gehalten, und bei Bedarf von dort dem Belebungsreaktor wieder zugeführt wird.

Dieser aktive Schlamm wird in dem Transferschlammdepot gelagert und bei Bedarf, insbesondere bei Erhöhung der organischen Zulaufbelastung durch das Abwasser, dem Belebungsreaktor wieder zugeführt. Unter "Transferschlammdepot" werden im Rahmen dieser Offenbarung jegliche Behältnisse verstanden, die zur Lagerung und Aktivhaltung von Schlamm geeignet sind, gleichgültig ob in offener oder geschlossener Form.

Hierbei erfolgt in dem Transferschlammdepot besonders bevorzugt eine Teilstabilisierung des Transferschlamms vor der Rückführung als aktive Biomasse in den Belebungsreaktor.

Besonders bevorzugt wird hierbei das aerobe Schlammalter des Transferschlamms im Transferschlammdepot überwacht. Somit steht jederzeit eine höchst aktiver Biomasse zur Zugabe in den Belebungsreaktor zur Verfügung, der bei Bedarf dem Belebungsreaktor zugeführt werden kann. Insbesondere sobald sich der Teillastbetrieb, zum Beispiel durch Ansteigen der Zulauffracht, wieder in Richtung Volllastbetrieb entwickelt, wird dem Belebungsreaktor aus dem Transferschlammdepot aktiver Transferschlamm als Belebtschlamm zugeführt. Die Aktivität des Transferschlamms wird gegebenenfalls durch intermittierende Belüftung aufrecht erhalten.

Der Transferschlamm wird als aktiver Schlamm in dem Transferschlammdepot gespeichert. Wird der Transferschlamm jedoch innerhalb einer vorgegebenen Zeit, also bis zum Erreichen des maximalen aeroben Schlammalters nicht als Transfer-/Belebtschlamm für den Belebungsreaktor benötigt, so wird er zur weiteren Schlammbehandlung aus dem Transferschlammdepot als Überschussschlamm abgezogen.

Selbstverständlich kann die Veränderung des Verhältnisses zwischen Belebtschlammmenge und Zulauffracht in dem Belebungsreaktor auch durch einer Kombination der vorgenannten Maßnahmen, nämlich durch Änderung des Nutzvolumens sowie der Menge des Belebtschlamms vorgenommen werden.

In verschiedenen Lastfällen kann bereits durch Veränderung des Nutzvolumens pro Reinigungszyklus ebenfalls die optimale Ammonium-Stickstoff-Schlammbelastung eingestellt werden, ohne dass Belebtschlamm als sogenannter Transferschlamm aus dem Belebungsreaktor entnommen oder dem Belebungsreaktor zugeführt werden muss. Hierbei erfolgt die Korrektur wie bereits oben beschrieben allein über die Veränderung des Nutzvolumens.

Die Qualität des zur Verfügung stehenden Transferschlamms innerhalb des Transferschlammdepots wird dadurch verbessert, dass die im Transferschlammdepot gelagerte aktive Biomasse ein maximales aerobes Schlammalter von 12 bis 25 Tagen, vorzugsweise maximal 15 Tagen aufweist. Das aerobe Schlammalter ist für Anlagen mit Nitrifikation der wichtigste Parameter für die Reinigungsleistung. Der Schrift der Abwassertechnischen Vereinigung ATV A 131, Anhang 1 (2000) können Werte für das aerobe Schlammalter für Anlagen mit Nitrifikation, Denitrifikation und aerobe Schlammstabilisierung entnommen werden. Gemäß der Tabelle 2 der ATV A 131 beträgt das Mindestschlammalter für Anlagen mit Nitrifikation und einer Temperatur von 10°C, 10 Tage aerob. Für Anlagen mit aerober Schlammstabilisierung und Nitrifikation werden 20 Tage (lt. Punkt 5.2.1.4) benötigt, bei gleichzeitiger Denitrifikation sind 25 Tage erforderlich.

Das erfindungsgemäße Verfahren ermöglicht es, abhängig von der Zulaufbelastung, das aerobe Schlammalter in der Belebung immer auf dem erforderlichen Wert für die Nitrifikation zu halten, die restlichen Tage bis zur endgültigen Stabilisierung werden im Transferschlammdepot oder in einem zusätzlichen Stabilisierungsdepot erbracht.

Ist die Anlage ausgelastet und eine Rückführung des Transfer-/Belebtschlamms in den Belebungsreaktor nur in geringem Maß notwendig, wodurch das Schlammalter des Transferschlamms im Transferschlammdepot ansteigt, ist daher erfindungsgemäß vorgesehen, dass der Schlamm aus dem Transferschlammdepot bei Bedarf einer vollständigen Stabilisierung und nachfolgend einer Schlammbehandlung zugeführt wird, um ein aerobes Gesamtschlammalter von maximal 25 Tagen einzuhalten.

Ebenso ist in einer weiteren bevorzugten Ausführung der Erfindung vorgesehen, dass der im Transferschlammdepot gelagerte Transferschlamm für weitere Reinigungsschritte, wie zum Beispiel für die biologische Phosphor-Elimination mit Denitrifikation unter anaeroben Verhältnissen genutzt wird. Hierbei erfolgt die Zugabe von Rohabwasser direkt in das Transferschlammdepot, wobei durch Ausschaltung einer zur Teilstabilisierung des Transferschlamms vorgesehenen Belüftung, mit einem Übergang von aerober zu anoxischer Phase, anaerobe Verhältnisse hergestellt werden. Der in dem Transferschlamm im Transferschlammdepot vorhandene, gelöste und/oder gebundene Sauerstoff wird verbraucht, und die Phosphat-Rücklösung findet statt. Nach Ablauf dieser Rücklösungsphase wird das mit Phosphat angereicherte Schlamm/Wasser-Gemisch aus dem Transferschlammdepot dem Belebungsreaktor zur Reinigung zugeführt, wobei im Austausch dem Belebungsreaktor die erforderliche angereicherte Phospat-Schlammmenge entnommen und dem Transferschlammdepot zugeführt wird, um in dem Belebungsreaktor gleichbleibende Schlammbedingungen zu gewährleisten, und den Zyklus der Phosphatrücklösung und -aufnahme aufrecht zu erhalten.

Erfindungsgemäß ist vorgesehen, dass die Ammoniumkonzentration des Abwassers vor dem Einbringen in den Belebungsreaktor und/oder im Belebungsreaktor während des Reinigungsverfahrens bestimmt wird. Auf diese Weise findet besonders bevorzugt eine permanente Überwachung der Ammoniumkonzentration statt, so dass - wie oben beschrieben - jederzeit die optimale Menge an Belebtschlamm im Belebungsreaktor auf die Ammonium-Zulaufbelastung abgestimmt werden kann. Durch diese Maßnahme wird sichergestellt, dass ein ausreichender Ammoniumabbau im Belebungsreaktor stattfindet, wodurch auch die vorhandenen organischen Frachten (z.B. BSB₅, CSB) optimal abgebaut werden. Die Erhaltung der hohen Belebtschlammqualität innerhalb des Belebungsreaktors ist gewährleistet, wenn zusätzlich nach jedem Reinigungszyklus eine bevorzugterweise automatische Schlammvolumenmessung und besonders bevorzugt eine automatische Schlammindex-Bestimmung erfolgt.

Als Schlammindex wird das Verhältnis von Schlammvolumen zu Trockensubstanz bezeichnet. Verschlechtert sich der Schlammindex, so erfolgt eine Korrektur in der erfindungsgemäßen Weise durch Änderung des Verhältnisses zwischen Belebtschlammmenge und Zulauffracht in dem Belebungsreaktor.

Eine effektive, verfahrens- und kostenoptimierte Betriebsweise der Kläranlage ist gegeben, wenn beim erfindungsgemäßen Verfahren die Messung, Überwachung und Auswertung der Ammoniumkonzentration, des Trockensubstanzgehalts (TS), der Temperatur, des Sauerstoffgehalts, des Nitratgehalts und des Vergleichsschlammvolumens, des chemischen Sauerstoffbedarfs (CSB), und des organisch gebundenen Kohlenstoffs (TOC), der Vergleich der erhaltenen Messwerte mit vorgegebenen Sollwerten oder Sollwertebereichen, die Bestimmung der Ammonium-Stickstoff-Schlammbelastung und des Schlammindex, sowie die Zufuhr oder der Abzug von Klarwasser und Schlamm vollautomatisch und/oder online erfolgen. Für den Abzug von Klarwasser und/oder Schlamm kann beispielsweise eine Vorrichtung zum Einsatz kommen, wie sie ebenfalls in der EP 2 078 702 A1 des Anmelders beschrieben ist.

Die Aufgabe wird des weiteren durch eine Vorrichtung zur diskontinuierlichen Abwasserreinigung gelöst, die zumindest einen Belebungsreaktor mit zumindest einer Abzugseinrichtung für Klarwasser und zumindest einer weiteren Abzugseinrichtung für Schlamm aufweist, wobei erfindungsgemäß vorgesehen ist, dass der zumindest eine Belebungsreaktor mit der Abzugseinrichtung für Schlamm mit zumindest einem Transferschlammdepot für Transferschlamm über eine erste Leitung in Verbindung steht, und des weiteren eine zweite Leitung zur Zuleitung von Transfer-/Belebtschlamm aus dem zumindest einen Transferschlammdepot in den Belebungsreaktor vorgesehen ist. Auf diese Weise kann bei Bedarf Transferschlamm aus dem Belebungsreaktor in ein Transferschlammdepot überführt werden, in diesem Transferschlammdepot teilstabilisiert werden und bei Bedarf als Transfer-/Belebtschlamm beispielsweise mittels Pumpen aus dem Transferschlammdepot in den Belebungsreaktor eingebracht werden.

Bevorzugterweise ist vorgesehen, dass das zumindest eine Transferschlammdepot mit zumindest einem Stabilisierungsreaktor für Überschussschlamm in Verbindung steht, um die aerobe Vollstabilisierung des Überschussschlammes zu erreichen.

Um einen kontrollierten Schlammpegel in den jeweiligen Reaktoren bzw. Transferschlammdepots aufrecht zu erhalten und dadurch einen optimalen Betrieb zu gewährleisten, weisen der zumindest eine Belebungsreaktor, das zumindest eine Transferschlammdepot und der Stabilisierungsreaktor bevorzugterweise jeweils eine Einrichtung zur Bestimmung des Schlammpegels, insbesondere Trübemesseinrichtungen, auf.

Besonders bevorzugt ist vorgesehen, dass zur Bestimmung der Ammoniumkonzentration pro Belebungs-Reaktorfüllung zumindest eine Ammoniumsonde und vorzugsweise zusätzlich eine Nitratsonde zur Bestimmung des Nitratgehaltes vorgesehen ist, während für die Bestimmung des Trockensubstanzgehaltes des Belebtschlamms des Belebungsreaktors vorzugsweise zumindest zwei Streulichtsignaldetektoren, die beispielsweise in einer Trockensubstanzsonde angeordnet sind, vorgesehen sind.

Alternativ oder zusätzlich ist vorzugsweise eine zentrale Messstelle für die Erfassung von Messdaten vorgesehen, die mit einem oder mehreren Belebungsreaktoren in Verbindung steht. Damit können insbesondere alle für das erfindungsgemäße Verfahren relevanten Daten an einer zentralen Stelle erfasst werden, wodurch insbesondere die Anzahl und damit verbunden die Kosten für die erforderlichen Messstellen reduziert werden.

Erfindungsgemäß ist vorgesehen, dass die Vorrichtung voll automatisch betrieben wird, wofür zusätzlich eine Steuerungseinheit zur Erfassung, Auswertung und Veränderung von gemessenen Ist-Werten gegenüber den Soll-Werten - sofern notwendig - in der Vorrichtung vorgesehen ist. Diese Steuerung steht besonders bevorzugt über eine vorzugsweise drahtlose Verbindung mit einer zentralen Überwachungsstelle in Verbindung.

Im Folgenden wird anhand eines nicht einschränkenden Ausführungsbeispiels mit zugehöriger Figur die Erfindung näher erläutert.

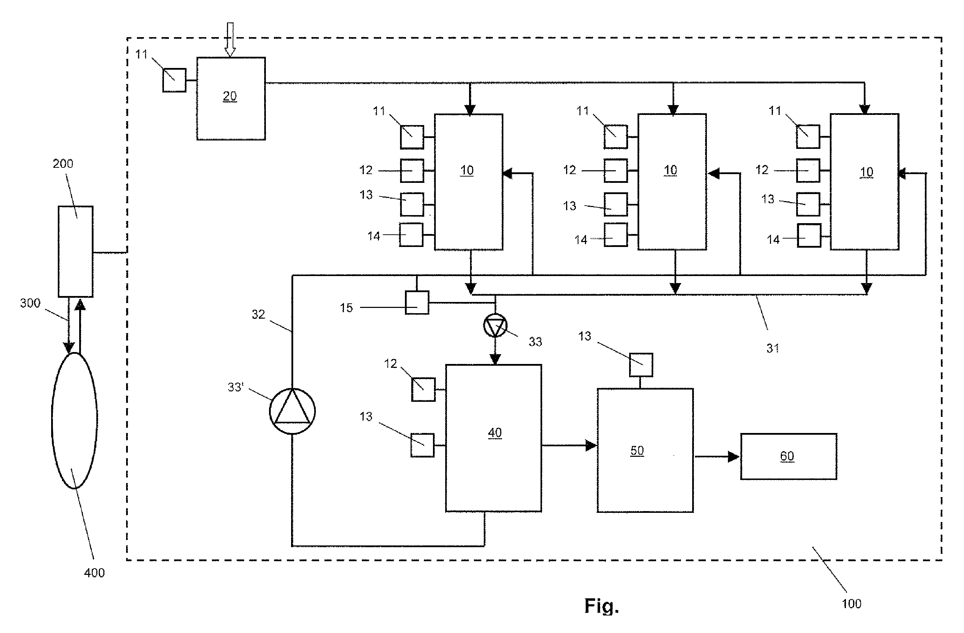

In der Figur ist das erfindungsgemäßen Verfahren mit einer hierfür geeigneten Vorrichtung 100 dargestellt. Diese Kläranlage weist drei Belebungsreaktoren 10 auf, die jeweils eine Ammoniumsonde als Einrichtung zur Bestimmung der Ammoniumkonzentration 11 des Abwassers aufweisen. Dieses Abwasser wird aus einem Beschickungs/Puffer-Tank 20, der ebenfalls eine Ammoniumsonde 11 zur Messung der Zulaufkonzentration an Ammonium aufweist, beschickt.

In jedem Belebungsreaktor 10 ist zusätzlich eine Einrichtung 12 zur Bestimmung des Trockensubstanzgehaltes TS des Belebtschlamms innerhalb des Belebungsreaktors 10, insbesondere zwei Streulichtsignaldetektoren, sowie eine Einrichtung zur Bestimmung des Schlammpegels 13, wie beispielsweise Trübemesseinrichtungen, vorgesehen.

Außerdem ist in dieser bevorzugten Ausführung der Erfindung eine Messstelle 14 zur vollautomatischen Bestimmung des Vergleichschlammvolumens VSV vorgesehen, wobei dieser Wert insbesondere in die Berechnung des Schlammindex eingeht. Diese Bestimmung erfolgt hierbei außerhalb des Belebungsreaktors 10, während die Messung von Sauerstoffgehalt, Schlammpegel und Trübemessung jedenfalls innerhalb des Belebungsreaktors 10 erfolgen. Die Bestimmung der Temperatur des Abwassers kann ebenfalls an unterschiedlichen Stellen erfolgen wie beispielsweise im Zulauf, im Puffertank 20 und/oder im Belebungsreaktor 10.

Allgemein können die unterschiedlichen Messungen sowohl im Belebungsreaktor 10 als auch an einer zentralen Stelle 15 außerhalb der Belebungsreaktoren 10 durchgeführt werden, wobei vorteilhafterweise die Messungen beispielsweise von Trockensubstanzgehalt, Ammoniumkonzentration, Temperatur und/oder Vergleichsschlammvolumen vollautomatisch und online erfolgen.

Jeder Belebungsreaktor 10 steht des Weiteren über eine erste Rohrleitung 31 mit einem Transferschlammdepot 40 in Verbindung, wobei über diese Rohrleitung 31 Schlamm aus den Belebungsreaktoren 10 dem Transferschlammdepot 40 zugeführt werden kann. Diese Zufuhr erfolgt je nach baulicher Gegebenheit per Freigefälle oder wie im dargestellten Fall mittels Pumpe 33. Über eine zweite Leitung 32, die über eine Pumpe 33' verfügt, wird bei Bedarf Transferschlamm aus dem Transferschlammdepot 40 in die jeweiligen Belebungsreaktoren 10 rückgeführt.

Das Transferschlammdepot 40 weist ebenfalls eine Einrichtung 12 zur Bestimmung des Trockensubstanzgehaltes, sowie eine Einrichtung 13 zur Bestimmung des Schlammpegels auf. Ist das Transferschlammdepot 40 auch zur fallweisen Reinigung von Rohabwasser, insbesondere zur biologischen Phosphoreliminierung vorgesehen, weist das Transferschlammdepot 40 zumindest eine zusätzliche Nitratsonde zur Bestimmung des Nitratgehaltes und eine Sauerstoffsonde auf (nicht dargestellt). Eine derartige Verwendung des Transferschlammdepots 40 zur Vorreinigung von Rohabwasser findet vor allem zu Zeiten des Volllastbetriebs der Kläranlage 100 statt, wenn kein Transferschlamm aus dem Transferschlammdepot 40 unmittelbar benötigt wird. Selbstverständlich können auch mehr als das eine in der Figur dargestellte Transferschlammdepot 40 vorgesehen sein.

Des weiteren steht das Transferschlammdepot 40 mit einem weiteren Stabilisierungsreaktor 50 in Verbindung, in dem Schlamm aus dem Transferschlammdepot 40 vollständig stabilisiert und anschließend einer Schlammbehandlung 60 zugeführt werden kann.

Die gesamte Anlage 100 wird hierbei von einer Steuerung 200 überwacht und vollautomatisch betrieben, wobei diese Steuerung 200 beispielsweise über eine Internetverbindung 300 mit einer zentralen Überwachungsstelle 400 in Verbindung steht.

## Patentansprüche

1. Diskontinuierliches Verfahren zur Abwasserreinigung mit den Schritten:
• Zufuhr von Abwasser in einen Belebungsreaktor (10)
• Belüften des Belebungsreaktorinhalts
• Beenden der Belüftung und Absinken von Schlamm
• Abzug von Klarwasser und gegebenenfalls von zumindest einem Teil des abgesetzten Schlamms,
wobei der Trockensubstanzgehalt (TS) des im Belebungsreaktors (10) befindlichen Belebtschlamms bestimmt wird,
**dadurch gekennzeichnet, dass** die Ammoniumkonzentration des zugeführten Abwassers pro Reaktorfüllung überwacht wird, und aus den erhaltenen Messwerten für die Ammoniumkonzentration sowie für den Trockensubstanzgehalt (TS) die im Belebungsreaktor (10) vorhandene Ammonium-Stickstoff-Schlammbelastung (B_{TSNH4}) ermittelt wird,
diese mit einem Sollwert verglichen wird und bei Abweichung des Ist-Wertes vom Sollwert das Verhältnis zwischen Belebtschlammmenge und Zulauffracht in dem Belebungsreaktor (10) verändert wird.

2. Diskontinuierliches Verfahren nach Anspruch 1, **dadurch gekennzeichnet, dass** zusätzlich eine Messung der Temperatur des Abwassers und/oder eine Messung des chemischen Sauerstoffbedarfs (CSB) und/oder des organisch gebundenen Kohlenstoffs (TOC) erfolgt.

3. Diskontinuierliches Verfahren nach einem der Ansprüche 1 oder 2, **dadurch gekennzeichnet, dass** die Veränderung des Verhältnisses zwischen der Belebtschlammmenge und der Zulauffracht in dem Belebungsreaktor (10) durch Änderung des Nutzvolumens in dem Belebungsreaktor (10) erfolgt.

4. Diskontinuierliches Verfahren nach einem der Ansprüche 1 bis 3, **dadurch gekennzeichnet, dass** die Veränderung des Verhältnisses zwischen der Belebtschlammmenge und der Zulauffracht in dem Belebungsreaktor (10) durch Abzug von Transferschlamm aus dem Belebungsreaktor (10) oder durch Zufuhr von Transferschlamm in den Belebungsreaktor (10) erfolgt.

5. Diskontinuierliches Verfahren nach Anspruch 4, **dadurch gekennzeichnet, dass** der Transferschlamm aus dem Belebungsreaktor (10) einem Transferschlammdepot (40) zugeführt wird, in dem eine Teilstabilisierung des Transferschlammes erfolgt, und bei Bedarf dem Belebungsreaktor (10) als Belebtschlamm wieder zugeführt wird, wobei vorzugsweise in dem Transferschlammdepot (40) das aerobe Schlammalter des Transferschlamms überwacht wird, wobei der Transferschlamm in dem Transferschlammdepot (40) ein maximales aerobes Schlammalter von 12 bis 25 Tagen, vorzugsweise von maximal 15 Tagen aufweist.

6. Diskontinuierliches Verfahren nach einem der Ansprüche 4 oder 5, **dadurch gekennzeichnet, dass** der Transferschlamm aus dem Transferschlammdepot (40) bei Bedarf einer vollständigen Stabilisierung und nachfolgend einer Schlammbehandlung zugeführt wird.

7. Diskontinuierliches Verfahren nach einem der Ansprüche 4 bis 6, **dadurch gekennzeichnet, dass** dem Transferschlammdepot (40) Rohabwasser für zusätzliche Reinigungsschritte, insbesondere für die biologische Phosphor-elimination mit Denitrifikation unter anaeroben Verhältnissen zugeführt wird, das anschließend in den Belebungsreaktor (10) eingeleitet wird.

8. Diskontinuierliches Verfahren nach einem der Ansprüche 1 bis 7, **dadurch gekennzeichnet, dass** die Ammoniumkonzentration des Abwassers vor dem Zulauf in den Belebungsreaktor (10) und/oder im Belebungsreaktor (10) während des Reinigungsverfahrens bestimmt wird.

9. Diskontinuierliches Verfahren nach einem der Ansprüche 1 bis 8, **dadurch gekennzeichnet, dass** zusätzlich eine Schlammvolumenmessung und/oder eine Schlammindex-Bestimmung erfolgt.

10. Diskontinuierliches Verfahren nach einem der Ansprüche 1 bis 9, **dadurch gekennzeichnet, dass** die Messung, Überwachung und Auswertung der Ammoniumkonzentration, des Trockensubstanzgehalts (TS), der Temperatur, des Sauerstoffgehalts, des Nitratgehalts, des Vergleichsschlammvolumens, des chemischen Sauerstoffbedarfs (CSB), und des organisch gebundenen Kohlenstoffs (TOC), der Vergleich der erhaltenen Messwerte mit vorgegebenen Sollwerten oder Sollwertebereichen, die Bestimmung der Ammonium-Stickstoff-Schlammbelastung (B_{TSNH4}) und des Schlammindex, sowie die Regelung der Zufuhr oder des Abzugs von Klarwasser und Schlamm vollautomatisch während der Abwasserreinigung innerhalb des Belebungsreaktors (10) erfolgen.

11. Vorrichtung (100) zur diskontinuierlichen Abwasserreinigung, insbesondere zur Durchführung eines Verfahrens nach einem der Ansprüche 1 bis 10, mit zumindest einem Belebungsreaktor (10), der zumindest eine Abzugseinrichtung für Klarwasser und zumindest eine weitere Abzugseinrichtung für Schlamm aufweist, **dadurch gekennzeichnet, dass** der zumindest eine Belebungsreaktor (10) mit der Abzugseinrichtung für Schlamm mit zumindest einem Transferschlammdepot (40) für Transferschlamm über eine erste Leitung (31) in Verbindung steht, und des weiteren eine zweite Leitung (32) zur Zuleitung von Transferschlamm aus dem zumindest einen Transferschlammdepot (40) in den Belebungsreaktor (10) vorgesehen ist.

12. Vorrichtung (100) nach Anspruch 11, **dadurch gekennzeichnet, dass** das zumindest eine Transferschlammdepot (40) mit zumindest einem Stabilisierungsreaktor (50) zur Überschussschlammentnahme in Verbindung steht.

13. Vorrichtung (100) nach Anspruch 11 oder 12, **dadurch gekennzeichnet, dass** der zumindest eine Belebungsreaktor (10), das zumindest eine Transferschlammdepot (40) und der Stabilisierungsreaktor (50) jeweils eine Einrichtung (13) zur Bestimmung des Schlammpegels aufweisen.

14. Vorrichtung (100) nach einem der Ansprüche 11 bis 13, **dadurch gekennzeichnet, dass** für die Bestimmung der Ammoniumkonzentration der im Belebungsreaktor (10) befindlichen Flüssigkeit zumindest eine Ammoniumsonde und zumindest eine Trockensubstanz-Sonde und vorzugsweise zusätzlich eine Nitratsonde (11) zur Bestimmung des Nitratgehaltes vorgesehen ist.

15. Vorrichtung (100) nach einem der Ansprüche 11 bis 14, **dadurch gekennzeichnet, dass** für die Bestimmung der Kohlenstoffzulauffracht (TOC) in einem dem Belebungsreaktor (10) vorgeschalteten Puffertank (20) eine CSB/TOC-Messsonde vorgesehen ist.

16. Vorrichtung (100) nach einem der Ansprüche 11 bis 15, **dadurch gekennzeichnet, dass** für die Bestimmung des Trockensubstanzgehalts (TS) des Belebtschlamms innerhalb des Belebungsreaktors (10) eine Trockensubstanz-Sonde (12) vorgesehen sind.

17. Vorrichtung (100) nach einem der Ansprüche 11 bis 16, **dadurch gekennzeichnet, dass** eine zentrale Messstelle (15) für die Erfassung von Messdaten und zusätzlich eine Steuerung (200) für den vollautomatischen Betrieb der Vorrichtung (100) vorgesehen ist, die mit einem oder mehreren Belebungsreaktoren (10) in Verbindung steht.
